# EUROPÄISCHE PATENTSCHRIFT

(11) **EP 0 560 293 B1**
(45) Veröffentlichungstag und Bekanntmachung des Hinweises auf die Patenterteilung: **28.02.1996**
(21) Anmeldenummer: 93103774.1
(22) Anmeldetag: 09.03.1993
(51) Int. Cl.: B23Q 1/25, B23Q 5/40

(54) **Vorrichtung zur Führung eines mittels einer Spindel angetriebenen Schlittens**
Device for guiding a carriage driven by a spindle
Dispositif pour le guidage d'un chariot entraîné par une broche

(30) Priorität: 11.03.1992 DE 9203295 U; 11.03.1992 DE 9203296 U
(43) Veröffentlichungstag der Anmeldung: 15.09.1993
(73) Patentinhaber: CGK Computer Gesellschaft Konstanz mbH, D-78467 Konstanz (DE)
(72) Erfinder: Papajewski, Horst, W-1740 Radolfzell (DE); Grohmann, Rafael Dipl.-Ing. (FH), W-7750 Konstanz 21 (DE); Reisacher, Günter, Dipl.-Ing., W-7750 Konstanz (DE); Schwarzbauer, Michael,Dipl.-Ing. (FH), W-7750 Konstanz (DE)
(74) Vertreter: Fuchs, Franz-Josef, Dr.-Ing.

(56) Entgegenhaltungen:
- FR-A- 1 524 085
- FR-A- 2 599 454
- GB-A- 1 153 654
- US-A- 1 540 801
- US-A- 4 434 677

## Beschreibung

Die Erfindung betrifft eine Vorrichtung zur Führung eines mittels einer Spindel angetriebenen Schlittens nach den Merkmalen des Oberbegriffs des Patentanspruchs 1.

Aus FR-A- 1 361 156 ist eine Vorrichtung zur Führung eines mittels einer Spindel angetriebenen Schlittens bekannt. Die im Schlitten geführte Spindel ist längs einer parallel zu einer in Schlittenbewegungsrichtung verlaufenden Außenkante des Schlittens angeordnet. Auf der Spindel sind in einem Abstand zueinander zwei Muttern angeordnet. Zwischen dem Schlitten und einer Mutter ist eine Feder eingespannt, die eine axiale Vorspannung erzeugt.

Schlitten werden beispielsweise als Träger für Abtastsensoren einer Druckvorlage verwendet, wobei es hier besonders darauf ankommt, daß die optoelektrischen Abtastsensoren mit hoher Geschwindigkeit entlang der Druckvorlage positioniert werden können. Wegen der hohen Anforderungen an eine exakte spielfreie Führung werden bei bekannten Vorrichtungen voneinander getrennte Mittel für Antrieb und Führung eingesetzt, wobei für den Antrieb Zahnriemen oder Spindeln und zur Führung ein oder mehrere Führungsstangen verwendet werden. Diese Maßnahme wird zwar den gestellten Forderungen gerecht, ist aber sehr aufwendig und für viele Anwendungsfälle zu teuer.

Der vorliegenden Erfindung liegt die Aufgabe zugrunde, für Schlitten die als Träger einer relativ zu einer Abtastflache hin- und herbewegbaren Abtasteinrichtung verwendet werden, eine Vorrichtung aufzuzeigen, die eine exakte spielfreie Führung des Schlittens bei minimalem Aufwand gewährleistet.

Diese Aufgabe wird durch die Merkmale des Patentanspruchs 1 gelöst. Vorteilhafte Weiterbildungen der Erfindung sind in den Unteransprüchen angegeben.

Durch die im Schlitten geführte Spindel, die längs einer parallel zu einer in Schlittenbewegungsrichtung verlaufenden Außenkante der Abtasteinrichtung angeordnet ist, und die im der Spindel gegenüberliegenden Bereich verlaufende Auflageleiste, auf der sich eine Stützrolle der Abtasteinrichtung abstützt, wird eine exakte spielfreie Führung des Schlittens erreicht. Zur Führung sind zwei Muttern in einem Abstand auf der Spindel angeordnet. Jeder Mutter ist mindestens eine Feder zugeordnet. Die Wirkungsenden dieser Federn sind einerseits mit in einem Abstand angeordneten Haltelaschen des Schlittens und andererseits mit der ihnen zugeordneten Mutter verbunden. Die Gewindetoleranzen an spindel- und schlittenseitigem Gewinde und ein durch Materialverschleiß entstehendes Spiel wird ausgeglichen. Zusätzlich kann eine Reibkorrosion wirksam verhindert werden. Damit genügt die Vorrichtung hohen Anforderungen, wie sie bei Verwendung eines Schlittens als Träger für Abtastsensoren einer Druckvorlage gestellt sind. Der Schlitten ist sowohl axial als auch radial spielfrei geführt. Auf Grund dieser exakten Spindelführung bedarf es keiner weiteren Führungselemente.

Eine nicht spielfreie Führung des Schlittens auf der Spindel kann sich auf Grund der Gewindetoleranzen sowohl in radialer als auch in axialer Richtung ergeben. Zudem trägt ein allmählicher Materialverschleiß sowohl am Spindelgewinde, als auch am schlittenseitigen Gewinde zur Spielvergrößerung bei. Dieser Verschleiß erhöht sich, wenn durch nicht genau fluchtende Achsen der Spindel und der schlittenseitigen Gewinde Korrosion auf Grund erhöhter Reibung auftritt.

Die beiden in einem Abstand voneinander auf der Spindel angeordneten Muttern sind nicht unmittelbar mit dem Schlitten verbunden. Zwischen Mutter und Schlitten erfolgt die Kraftübertragung jeweils über eine Feder. Die Wirkungsenden jeder Feder sind einerseits mit dem Schlitten und andererseits mit einer auf der Spindel angeordneten Mutter verbunden. Die Federkonstante ist so zu wählen, daß die spielfreie Führung gewährleistet ist und zudem keine unerwünschten Schwingungen des Schlittens auftreten können.

Die größtmögliche Schwingungsdämpfung erhält man, wenn die Muttern jeweils im Bereich der die Achse der Spindel schneidenden Breitseiten des Schlittens, also in größtmöglichem Abstand zueinander angeordnet sind und scheibenförmig ausgebildete Federn verwendet werden. Die scheibenförmigen Federn werden dabei mindestens zweimal von außen nach innen bis zu einem zwischen dem Innendurchmesser und dem Außendurchmesser liegenden Schlitzdurchmesser geschlitzt. Diese Schlitze werden entlang des Schlitzdurchmessers bis zu einem Endpunkt verlängert. Der Endpunkt befindet sich in jeweils ausreichender Bruchfestigkeit gewährleistendem Abstand vom nachfolgenden Schlitz. Zur Verbindung mit den Muttern einerseits und dem Schlitten andererseits sind an den Wirkungsenden der durch die Schlitze gebildeten Federzungen Scheibendurchbrüche in Achsrichtung vorhanden.

Diese scheibenförmig ausgebildeten Federn zeichnen sich durch besondere Steifigkeit in radialer Richtung und durch geringere Steifigkeit in axialer Richtung aus. Diese Eigenschaft bedingt einen besonders geringen Verschleiß der aufeinander gleitenden Gewinde und einen guten Toleranzausgleich der Gewinde.

Im folgenden werden Ausführungsbeispiele der Erfindung anhand der Zeichnung näher erläutert. Dabei zeigen
- Figur 1: eine erfindungsgemäße Vorrichtung in Draufsicht,
- Figur 2: ein Detail einer Seitenansicht der Vorrichtung nach Figur 1 in Blickrichtung des Pfeils II in Figur 1,
- Figur 3: ein Detail der Verbindung einer Spindel mittels einer Feder an einem Schlitten, entlang der in Figur 2 mit III-III gekennzeichneten Schnittlinie durch die Spindel,
- Figur 4: ein Detail einer Seitenansicht der Vorrichtung nach Figur 1 in Blickrichtung des Pfeils IV.

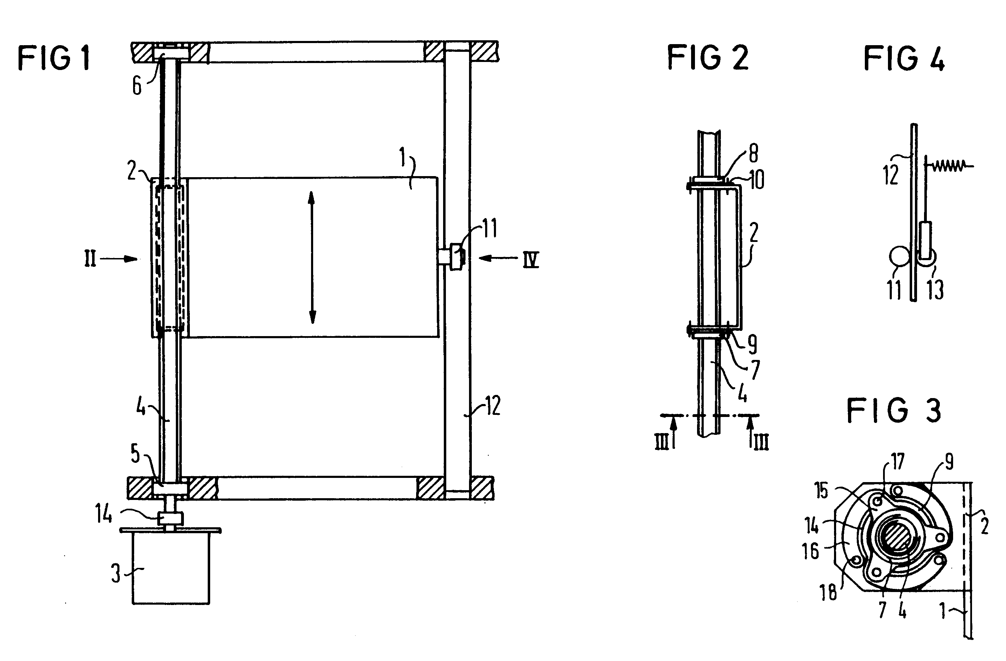

Figur 1 zeigt den schematischen Aufbau einer optoelektronischen Abtasteinrichtung, bei der ein, eine Lichtabtasteinrichtung 1 tragender Schlitten 2 relativ zu einer Abtastfläche bewegbar gelagert ist. Als Antrieb für den längs einer Kante der im wesentlichen rechteckförmigen Lichtabtasteinrichtung 1 angeordneten Schlitten 2 dient eine durch einen Motor 3 über eine Kupplung 14 angetriebene Spindel 4, die an beiden Enden in Kugellagern 5, 6 geführt ist.

Wie die Figur 2 zeigt, besteht der Schritten 2 aus einem U-förmigen Bügel, dessen U-Schenkel als Haltelaschen für die Spindel 4 dienen. Die Befestigung des Schlittens 2 erfolgt mittels zweier Muttern 7,8, die an den Haltelaschen unter Zwischenlage je einer Feder 9, 10 festgeklemmt werden. Auf diese Weise ist der Schritten 2 sowohl axial als auch radial spielfrei geführt. Auf Grund dieser exakten Spindelführung bedarf es keiner weiteren Führungselemente, so daß es ausreicht, die Lichtabtasteinrichtung 1, auf der der Spindel 4 gegenüberliegenden Kante lediglich durch ein Stützrad 11 zu führen, das entlang einer Abtastleiste 12 abrollt. Zusätzlich kann, wie die Figur 4 zeigt an der Unterseite der Auflageleiste 12 eine federnd gelagerte Gegenrolle 13 vorgesehen werden.

Gemäß einem weiteren Ausführungsbeispiel sind die Federn 9, 10 und die Muttern 7, 8, wie in Figur 3 gezeigt, ausgebildet. Die Haltelaschen des Schlittens 2 sind an dessen Breitseiten angeordnet. Die Muttern 7, 8 befinden sich jeweils auf den axial nach außen zeigenden Seiten der Haltelaschen. Zwischen den Haltelaschen und den Muttern 7, 8 ist jeweils eine seheibenförmig ausgebildete Feder 9, 10 angeordnet.

Die scheibenförmigen Federn 9, 10 weisen einen Innendurchmesser auf, der größer ist als der Außendurchmesser der Spindel 4. Der Außendurchmesser ist größer als der Außendurchmesser der Muttern 7, 8. Vom Außendurchmesser der scheibenförmigen Federn 9, 10 ausgehend, ist die Scheibe dreimal in Richtung des Innendurchmessers bis zu einem Schlitzdurchmesser geschlitzt. Der Schlitzdurchmesser ist größer oder gleich dem Außendurchmesser der Muttern 7, 8. Jeder Schlitz 14 setzt sich entlang des Schlitzdurchmessers im Uhrzeigersinn bis zu einem Endpunkt fort. Dieser Endpunkt ist so gewählt daß ein, eine ausreichende Bruchfestigkeit gewährleistender Abstand zum im Uhrzeigersinn nachfolgenden Schlitz 14 gewährleistet ist. Durch diese Art der Schlitzführung entstehen pro scheibenförmiger Feder 9, 10 drei Federzungen 16. Ein inneres Wirkungsende jeder Federzunge 16 bildet der Bereich zwischen Endpunkt und nachfolgendem Schlitz 14. Ein äußeres Wirkungsende befindet sich am anderen Ende der jeweiligen Federzunge 16. An den Wirkungsenden sind jeweils Scheibendurchbrüche in Form von Bohrungen 17, 18 in Achsrichtung der Federn 9, 10 eingebracht.

Die äußeren Wirkungsenden 18 der Federzunge 16 sind am Schlitten 2 festgenietet. Die inneren Wirkungsenden sind mit Laschen 15 vernietet. Die Laschen 15 ragen radial aus dem Umfang der Muttern 7, 8 hervor. Die Laschen 15 sind jeweils fest mit einer der Muttern 7, 8 verbunden.

## Patentansprüche

1. Vorrichtung zur Führung eines mittels einer Spindel (4) angetriebenen Schlittens (2), der als Träger einer Abtasteinrichtung (1) relativ zu einer Abtastfläche hin- und herbewegbar ist, mit einer Anordnung der im Schlitten (2) geführten Spindel (4) längs einer parallel zu einer in Schlittenbewegungsrichtung verlaufenden Außenkante des Schlittens (2), mit mindestens zwei in einem Abstand auf der Spindel (4) angeordneten Muttern (7,8) und mit einer zwischen dem Schlitten (2) und einer Mutter (7) eingespannten Feder (9), die eine axiale Vorspannung erzeugt,
**dadurch gekennzeichnet**,
daß jeder Mutter (7,8) eine Feder (9, 10) zugeordnet ist, deren Wirkungsenden einerseits mit in einem Abstand angeordneten Haltelaschen des Schlittens (2) und andererseits mit der zugeordneten Mutter (7,8) verbunden sind, daß die Federn (9, 10) aufgrund eines Unterschiedes zwischen den Abständen der Haltelaschen und der Muttern (7,8) eine axiale Vorspannung erzeugen und daß der Schlitten (2) und/oder die am Schlitten (2) befestigte Abtasteinrichtung (1) an dem der Spindel (4) gegenüberliegenden Bereich wenigstens eine Stützrolle (11) aufweist, der als Gegenelement eine parallel zur Spindelachse verlaufende Auflageleiste (12) zugeordnet ist.

2. Vorrichtung nach Anspruch 1, mit einer Anordnung der Muttern (7, 8) jeweils im Bereich der die Achse der Spindel (4) schneidenden Breitseiten des Schlittens (2), an denen die Haltelaschen am Schlitten (2) angeordnet sind.

3. Vorrichtung nach einem der Ansprüche 1 oder 2, mit
- scheibenförmig ausgebildeten Verbindungselementen (9, 10), die mindestens zweimal von außen nach innen bis zu einem zwischen Innendurchmesser und Außendurchmesser liegenden Schlitzdurchmesser geschlitzt sind,
- einer Verlängerung dieser Schlitze (14) entlang des Schlitzdurchmessers bis zu einem Endpunkt, der sich in jeweils ausreichende Bruchfestigkeit gewährleistendem Abstand zum nachfolgenden Schlitz (14) befindet, und
- durch die Schlitze (14) gebildete Federzungen (16), deren Wirkungsenden die Wirkungsenden der Verbindungselemente (9, 10) bilden.

4. Vorrichtung nach Anspruch 3, mit
- radial vom äußeren Umfang der Muttern (7,8) abstehenden, mechanisch fest mit den Muttern (7,8) verbundenen Laschen (15), deren Anzahl der Anzahl der Federzungen (16) entspricht, und
- mit einer Verbindung je einer Lasche (15) mit dem nicht freien Wirkungsende einer Federzunge (16).

5. Vorrichtung nach einem der vorhergehenden Ansprüche 1 bis 4 mit einer Nietverbindung der Wirkungsenden der Verbindungselemente (9, 10) mit dem Schlitten (2) bzw. den Muttern (7, 8).

6. Vorrichtung nach einem der vorhergehenden Ansprüche, mit einer der Stützrolle (11) zugeordneten, auf der Unterseite der Auflageleiste (12) federnd anliegenden Gegendruckrolle (13).

## Claims

1. Device for guiding a carriage (2) which is driven by a spindle (4) and, as carrier of a scanning device (1), can be moved to and fro relative to a scanning surface, having an arrangement of the spindle (4) guided in the carriage (2) along an outer edge of the carriage (2) extending parallel to the direction of motion of the carriage, having at least two nuts (7, 8) arranged at a distance apart on the spindle (4), and having a spring (9) which is clamped between the carriage (2) and one nut (7) and produces an axial prestress, characterized in that each nut (7, 8) is assigned a spring (9, 10) whose effective ends are connected on the one hand to holding tabs of the carriage (2), arranged at a distance apart, and on the other hand to the associated nut (7, 8), in that the springs (9, 10) generate an axial prestress on the basis of a difference between the distances between the holding tabs and the nuts (7, 8), and in that the carriage (2) and/or the scanning device (1) fastened on the carriage (2) has, in that region lying opposite the spindle (4), at least one supporting roller (11) which is assigned as counterelement a bearing strip (12) extending parallel to the spindle axis.

2. Device according to Claim 1, having an arrangement of the nuts (7, 8) in each case in the region of the broad sides, intersecting the axis of the spindle (4), of the carriage (2), on which broad sides the holding tabs on the carriage (2) are arranged.

3. Device according to one of Claims 1 or 2, having
- connecting elements (9, 10) of disc-shaped design, which are slotted at least twice from the outside inwards as far as a slot diameter lying in between internal diameter and external diameter,
- an extension of these slots (14) along the slot diameter as far as an end point which is located at a distance apart from the subsequent slot (14) which ensures a sufficient breaking strength in each case, and
- spring tongues (16), which are formed by the slots (14) and whose effective ends form the effective ends of the connecting elements (9, 10).

4. Device according to Claim 3, having
- tabs (15), which protrude radially from the outer periphery of the nuts (7, 8) and are mechanically fixedly connected to the nuts (7, 8) and the number of which corresponds to the number of spring tongues (16), and
- having a connection of each tab (15) to the not-free effective end of a spring tongue (16).

5. Device according to one of the preceding Claims 1 to 4, having a riveted connection of the effective ends of the connecting elements (9, 10) to the carriage (2) and to the nuts (7, 8).

6. Device according to one of the preceding claims, having a counterpressure roller (13) which is assigned to the supporting roller (11) and rests in sprung fashion on the outer side of the bearing strip (12).

## Revendications

1. Dispositif de guidage d'un chariot (2), qui est entraîné par une broche (4) et qui, en tant que support d'un dispositif de balayage (1), peut être déplacé en va-et-vient par rapport à une surface d'exploration, la broche (4), guidée dans le chariot (2), étant disposée le long d'un bord extérieur du chariot (2), parallèle à la direction de mouvement du chariot, et comportant au moins deux écrous (7,8) disposés à distance sur la broche (4) et un ressort (9), qui est inséré entre le chariot (2) et un écrou (7) et qui produit une précontrainte axiale,
caractérisé par le fait
qu'à chaque écrou (7,8) est associé un ressort (9,10), dont les extrémités d'action sont reliées d'une part à des pattes de retenue du chariot (2), disposées à distance, et d'autre part à l'écrou associé (7,8), les ressorts (9,10) produisent une précontrainte axiale sur la base d'une différence entre les distances des pattes de retenue et des écrous (7,8), et le chariot (2) et/ou le dispositif de balayage (1), fixé au chariot (2), comporte dans la zone située en face de la broche (4), au moins un galet d'appui (11), auquel est associée, en tant qu'élément antagoniste, une barrette de support (12) qui s'étend parallèlement à l'axe de la broche.

2. Dispositif suivant la revendication 1, dans lequel les écrous (7,8) sont disposes au niveau des petits côtés du chariot (2), qui coupent l'axe de la broche (4) et les pattes de retenue sont montées sur le chariot (2).

3. Dispositif suivant l'une des revendications 1 ou 2, comportant
- des éléments de liaison (9,10) en forme de disques et qui sont fendus au moins deux fois de l'extérieur vers l'intérieur jusqu'à un diamètre de fente compris entre le diamètre intérieur et le diamètre extérieur,
- un prolongement de ces fentes (14) le long de la périphérie de la fente jusqu'à un point d'extrémité qui est à une distance de la fente suivante (14), qui garantit une résistance suffisante à la rupture, et
- des languettes élastiques (16), qui sont formées dans les fentes (14) et dont les extrémités d'action forment les extrémités d'action des éléments de liaison (9,10).

4. Dispositif suivant la revendication 3, comportant
- des pattes (15), qui font saillie sur le pourtour extérieur des écrous (7,8) et sont reliées mécaniquement de façon fixe aux écrous (7,8) et dont le nombre correspond au nombre des languettes élastiques (16), et
- un raccordement de chaque patte (15) à l'extrémité d'action non libre d'une languette élastique (16).

5. Dispositif suivant l'une des revendications précédentes 1 à 4, comportant un rivetage des extrémités d'action des éléments de liaison (9,10) au chariot (2) ou aux écrous (7,8).

6. Dispositif suivant l'une des revendications précédentes, comportant un galet de contre-pression (13) qui est associé au galet d'appui (11) et s'applique élastiquement à la face inférieure de la barrette de support (12).
